# EUROPEAN PATENT APPLICATION

(11) **EP 4 844 396 A1**
(43) Date of publication of application: **25.11.2026**
(21) Application number: 26156659.0
(22) Date of filing: 05.02.2026
(51) Int. Cl.: G01N 29/04, G01N 29/22, G01N 29/24, G01N 29/265

(54) **INSPECTION AND MONITORING PIECE OF EQUIPMENT FOR SUBSEA PIPELINES FOR GUIDED WAVE GENERATION**

(30) Priority: 19.05.2025 BR 102025010040
(71) Applicant: Petroleo Brasileiro S.A. - PETROBRAS, 20031-912 Rio de Janeiro (BR); Universidade Federal Do Rio Grande Do Sul - UFRGS, 90040-060 Porto Alegre (BR)
(72) Inventor: DOS SANTOS, RAFAEL WAGNER FLORENCIO, 21941-915 Rio de Janeiro (BR); DA LUZ DORNELES, LUCAS, 90050-080 Porto Alegre (BR); DE ABREU CORRÊA, LÚCIO, 90050-100 Porto Alegre (BR); DE SOUZA AIRES, GUILHERME, 20231-030 Rio de Janeiro (BR); DE OLIVEIRA, HENRIQUE TORMEN HAAN, 90110-020 Porto Alegre (BR); DIAS DA SILVA, WESLLEY CARLOS, 21941-915 Rio de Janeiro (BR); SENA CASAGRANDE, MARCUS VINICIUS, 27913-350 Macaé (BR); BISOGNIN, ALBERTO, 90650-002 Porto Alegre (BR); CLARKE, THOMAS GABRIEL ROSAURO, 90630-040 Porto Alegre (BR)
(74) Representative: Clarke, Modet y Cía., S.L.

(57) **Abstract**

The present invention relates to a piece of equipment for inspecting and monitoring subsea pipelines, using a collar of EMAT (Electromagnetic Acoustic Transducers) sensors for guided wave generation, in addition to a coupling tool operated by an ROV. This piece of equipment is designed for inspecting rigid piping in offshore environments, encompassing areas from the intertidal zone to the transition region (Touchdown) and can be applied to jumpers.

## Description

### Field of the Invention

The present invention pertains to the technical field of inspection and/or monitoring of rigid subsea piping, being applied more specifically to piping with corrosion-resistant casings operating over the casing, without the need for removal of the same. In this way, there is only a need for cleaning to remove marine life, so that the specific element that reinforces the concentricity between the collar of sensors and the piping could be applied in other solutions where this need exists.

### Backgrounds of the Invention

The inspection of subsea piping, also known as subsea inspection, faces significant technical challenges, especially due to restricted access and adverse conditions of the subsea environment. With the goal of facilitating access and conducting inspections in deep and hard-to-reach areas, Remotely Operated underwater Vehicles (ROVs) and Autonomous Underwater Vehicles (AUVs) are used. These vehicles allow the transport and positioning of inspection equipment in specific locations on piping, and for this, it is necessary that these equipment be "marinized" - that is, adapted to withstand the high pressure, corrosion, and temperature variations of the subsea environment.

Notably, the inspection of subsea piping faces numerous technical challenges, with limited access being one of the main obstacles to the monitoring and maintenance of these subsea structures. The subsea piping are essential for the transport of oil, gas, and other resources in marine environments, and their integrity is critical to preventing leaks and environmental damage. Given the complexity of this scenario, the use of Remotely Operated underwater Vehicles (ROVs) and Autonomous Underwater Vehicles (AUVs) is a widely adopted solution, allowing the inspection of locations that would be inaccessible to divers and offering greater safety and efficiency.

To ensure effectiveness, the inspection equipment are often "marinized," that is, adapted to withstand subsea conditions - such as high pressure, low temperature, and exposure to the marine corrosion. This adaptation includes the need for precise control and robust equipment to handle the operating conditions offshore. However, the introduction of ROVs and AUVs as inspection platforms, while useful, brings new technical challenges, especially related to the handling of sensory systems in piping.

A clear example is the use of magnetic sensors in guided wave inspection techniques, one of the methodologies for fault detection and structural integrity monitoring. In this method, the sensors are positioned on the surface of the piping and generate mechanical waves that propagate through the material, detecting irregularities that may indicate corrosion, cracks, or other defects. However, the precision of data collection is directly influenced by the exact positioning of these sensors. Any deviation between the sensor arrangement and the piping surface generates discrepancies in the lifting values, known as lift-off, compromising the quality of the detection and analysis.

This limitation highlights the need for equipment that not only serve as an operating interface between the ROV and the sensors, but are also capable of precisely aligning the sensors with the pipe surface. Such equipment must be able to adjust the position and ensure the concentricity of the sensors in relation to the piping, thus minimizing the measurement errors caused by the misalignment.

One of the methods used for piping inspection is the guided wave inspection, where specialized sensors generate and capture mechanical waves that propagate along the piping. This technique is sensitive to the precise positioning of the sensors, since any deviation between the alignment of the sensor and the piping surface can result in variations in the recorded lift-off data. This type of discrepancy reduces the reliability of the collected data, making the use of an auxiliary device that can ensure the correct alignment of the sensor a technical necessity for efficient field application.

Currently, the most common inspection equipment for onshore piping, whether overhead or buried, use piezoelectric sensors, which require direct contact with the base metal of the piping to ensure accurate results. However, in subsea piping, the direct access to the base metal is hampered by the presence of anti-corrosion or thermal insulation casings, usually composed of polymeric materials. These casings, in addition to protecting the integrity of the piping, represent a significant barrier to inspection, since the partial or total removal thereof is not always feasible or recommended. Consequently, the applicability of the piezoelectric sensors is considerably reduced in subsea environments.

In addition to the piezoelectric sensors, another technology available for corrosion inspection in subsea piping is based on electromagnetic sensors. This approach uses tomography techniques that can detect corrosion in piping structures, but, as a disadvantage, it is only applicable in continuous monitoring mode. This means that the array of sensors needs to be permanently coupled to the piping for monitoring to occur, which limits the detection range to a range of up to 2 meters and requires a permanent installation at the inspection site.

Therefore, while the piezoelectric sensors require direct contact and have applicability limitations due to the anti-corrosion casings, the electromagnetic sensors, even without requiring direct contact, have range limitations and require permanent coupling. The choice of the ideal technology for subsea piping inspection will depend on a detailed analysis of the specific conditions of each environment and the type of monitoring required, considering the access restrictions and the features of the piping to be inspected.

Consequently, the development of solutions that allow for the proper coupling of sensors, along with positioning control, is an ongoing field of research, mainly in subsea engineering. These advances are essential to improve the precision of the collected data and increase the safety and reliability of the inspection equipment in subsea piping.

In view of this scenario, the present invention proposes a piece of equipment for inspecting subsea pipelines for generating guided waves that meets the needs of offshore piping inspection and monitoring, specifically in a rigid piping. The proposed equipment can be used throughout the entire wetted length, from the intertidal zone to the transition region (Touchdown), and can also be applied, if the equipment dimensions allow, to connection equipment such as jumpers, equipment used on the seabed for connection between risers and other components such as manifolds and Christmas trees.

In particular, in order to solve the technical problems described above, the present invention can be used both for inspection tasks where the equipment is mounted on the pipe to take measurements and subsequently removed, and for monitoring where the equipment is installed and remains resident in the piping. In addition, guided waves are used for corrosion mapping, which has a range on the order of tens of meters. Moreover, the present invention presents devices related to the inspection and monitoring piece of equipment that aims at the better coupling of electromagnetic sensors and collars of sensors in subsea piping with the use of ROVs, so that the best coupling concerns the lift-off of the sensors relative to the concentricity of the array of sensors with the piping.

Moreover, the equipment of the present invention has the advantage of using electromagnetic acoustic sensors. This type of sensor has the characteristic of operating without a direct contact with the base material of the pipe, presenting an advantage over other types of sensors for subsea applications and guided wave applications.

### State of the Art

In the state of the art, there is subsea piping inspection equipment; however, none of these devices has a collar of transducers that can be coupled by ROV at a safe distance to the intertidal zone, for example, and the guided waves that will propagate in the pipeline to receive information on the state of integrity of the pipeline in this hard-to-reach region.

Patent document US9903839B2, for example, refers to subsea inspection equipment and, more particularly, to subsea ultrasonic inspection equipment employing acoustic electromagnetic transducers (EMATs) to inspect subsea objects, such as subsea tubular items, conduits, piping, pipelines, risers, vessels, structures and so on. This document describes an acoustic electromagnetic transducer for inspecting a subsea object, comprising: a magnetic component to generate a magnetic field on a subsea object; a coil to induce eddy currents on a surface of the subsea object; seawater flow holes for channeling seawater adjacent to the coil; and a substantially non-conductive wear plate, wherein the non-conductive wear plate comprises a non-metallic material, disposed in a lower portion of the acoustic electromagnetic transducer. One embodiment provides an acoustic electromagnetic transducer for inspecting a subsea object. The acoustic electromagnetic transducer may comprise: a magnet for generating a magnetic field on a subsea object; a coil for inducing eddy currents on a surface of the subsea object; seawater flow holes for channeling seawater adjacent to the coil; and a substantially non-conductive wear plate disposed in a lower portion of the electromagnetic acoustic transducer. Another embodiment provides an electromagnetic acoustic transducer scanner assembly for inspecting a subsea object. The electromagnetic acoustic transducer scanner assembly may comprise: a carriage; a first transducer cart comprising an electromagnetic acoustic transducer transmitter; and a second transducer cart comprising an electromagnetic acoustic transducer receiver, wherein the first and second transducer carts are each disposed in the carriage and configured for use subsea inspection.

In turn, the document "Deepwater NDT Technology for pipes and tubular structures" describes an NDT inspection technology for inspecting deepwater pipes and tubular structures designed by the SubCTest prototype and conceived by SMEs to explore a new market with enormous growth potential - NDT for offshore subsea structures. The SubCTest equipment consists of an ROV-deployed NDT collar employing two technologies: Long Range Ultrasonic Testing (LRUT) and Electromagnetic Acoustic Transducer (EMAT). Once the LRUT detects a defect in a subsea pipe or structure, the EMAT investigates the severity of the defect. The LRUT covers a length of pipe simultaneously, which makes the inspection less time-consuming, and the equipment is deployed underwater using a work-class ROV to test subsea pipes.

Furthermore, patent document US9201045B2 refers to an exemplary electromagnetic acoustic transducer (EMAT) tubular inspection equipment for inspecting a tubular body that includes an EMAT tubular inspection device that runs inside the line.

The device may include a spine with a longitudinal support body and radial projection rails, and several telescopic sections, each connected to the radial projection rails. The telescopic sections may include a magnetic back panel, one or more wheels positioned to engage an inner surface of a tubular body during inspection, and signal propagation and reception modules carried by the magnetic back panel. Each module may include a magnet and different types of EMAT inspection transducer coil arrangements connected to the magnet. The different types of EMAT inspection transducer coil arrangements provide the generation of NBSH, SW, and SV waves.

### Brief Description of the Invention

The present invention relates to a piece of equipment for inspecting and monitoring subsea pipelines (1) for generating guided waves, comprising: an equipment structure (2); a hydraulic assembly for attaching the equipment to the pipe (3); a hydraulic assembly for coupling the collar (4); an assembly of sensors called a collar of sensors (5); a handle for ROV (6); a hydraulic connection point (7); an electrical and data connection point (8); mechanical stops (9); a piping (10); piping casing (11); attaching blocks (12); arms of the attaching hydraulic assembly (13); fork of the attaching actuator (14); a hydraulic actuator of the attaching hydraulic assembly (15); a attaching block of the actuator of the attaching hydraulic assembly (16); a movable shoe for attachment to the pipe (17); a contact lining (18); a fixed shoe for attaching to the pipe (19); handles for removing the axles of the attachment arms (20); attaching shoes of the coupling actuators (21); collar coupling actuators (22); a main axle of the coupling hydraulic assembly (23); a floating axle (24); connecting arms between axles (25); a floating axle bearing (26); coupling actuator axle tip (27); collar load application axles (28); halves of the collar of sensors (29); hermetic boxes (30); a connecting arm (31); and a opening and closing arm of the collar (32); wherein the collar of sensors (5) comprises an ultrasonic collar consisting of a plurality of electromagnetic acoustic sensors operating without a direct contact with a base material of a pipe; and wherein the collar of sensors (5) is coupled by an ROV at a distance to an intertidal zone. The collar of sensors (5) consists of one or more parallel rows of sensors, forming one or more sensor rings. The acoustic sensors are of the EMAT type and are arranged in four rows, separated into pairs, with a first emitter pair and a second receiver pair. The acoustic sensors predominantly generate shear stresses in the longitudinal direction of the pipe, with the excitation of modes from the T01 family prevailing. The acoustic sensors predominantly measure shear stresses in the longitudinal direction of the pipe, with the sensitivity of modes from the T01 family prevailing. Moreover, the second receiver pair of the acoustic sensors has an electronic circuit for pre-amplification of electrical signals and an electrical switch controlled by an embedded controller. In addition, the first emitter pair of the acoustic sensors has an electrical switch controlled by an embedded controller. The collar of sensors (5) comprises arrays of sensors that are housed in two parts, being halves of a split ring, where the halves of the split ring are joined by an axle that ensures the concentric closure of the two halves with each other. Additionally, the hydraulic assembly for securing the assembly to the pipe (3) has articulated arms with shoes at the ends that come into contact with the piping, and the hydraulic assembly for attaching (3) is actuated by hydraulic cylinders. The hydraulic assembly for coupling the collar (4) has articulated arms connected to the collar of sensors, a rotating axle coupled to the tool structure and a second axle whose movement provides the rotating axle to half of the collar.

### Brief Description of the Figures

In order to complement the present description and obtain a better understanding of the features of the present invention, and in accordance with a preferred embodiment thereof, a set of figures is presented attached, where, in an exemplary, though not limiting, manner, its preferred embodiment is represented.

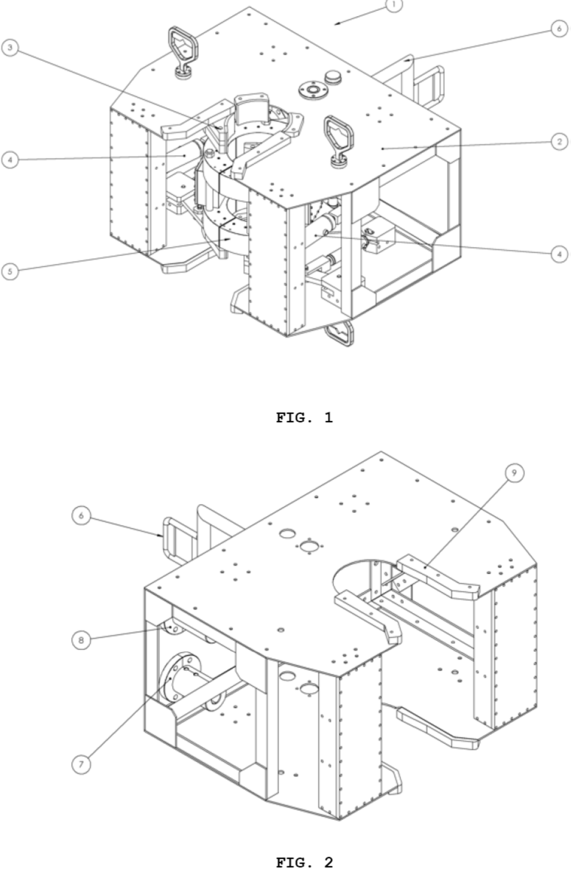

Figure 1 is a representation of parts of the claimed equipment (1), comprising the equipment structure (2), the hydraulic assembly for attaching the assembly to the pipe (3), the hydraulic assembly for coupling the collar (4), the assembly of sensors called the collar of sensors (5) and the ROV handle (6), in accordance with a preferred embodiment of the present invention.
Figure 2 is a representation of parts of the body of the claimed equipment, comprising an ROV handle (6), a hydraulic connection point (7), an electrical and data connection point (8) and mechanical stops (9), in accordance with a preferred embodiment of the present invention.

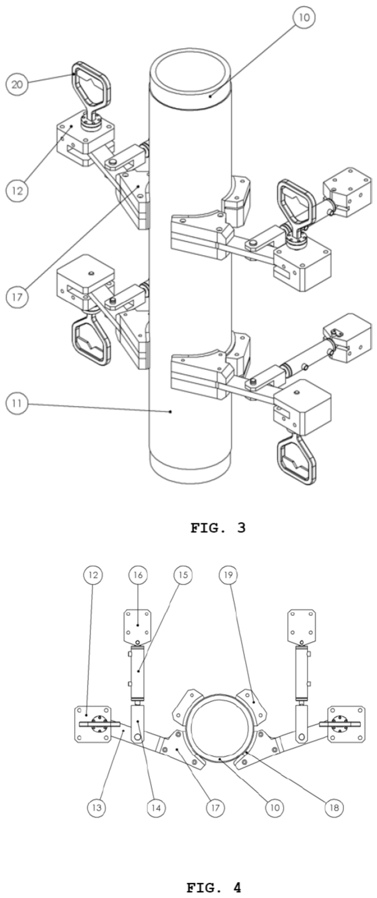

Figure 3 is a representation of parts of the attaching hydraulic assembly (3) of the claimed equipment, comprising piping (10), piping casing (11), attaching blocks (12), a movable shoe for attachment to the pipe (17) and handles for removing the axles of the attachment arms (20), according to a preferred embodiment of the present invention.
Figure 4 is a representation of parts of the attaching hydraulic assembly (3) of the claimed equipment, comprising piping (10), attaching blocks (12), arms of the attaching hydraulic assembly (3), attaching actuator fork (14), the hydraulic actuator (15) of the attaching hydraulic assembly (3), the attaching block (16) of the actuator of the attaching hydraulic assembly (3), the movable shoe for attachment to the pipe (17), the contact lining (18) and the fixed shoe for attaching to the pipe (19), according to a preferred embodiment of the present invention.

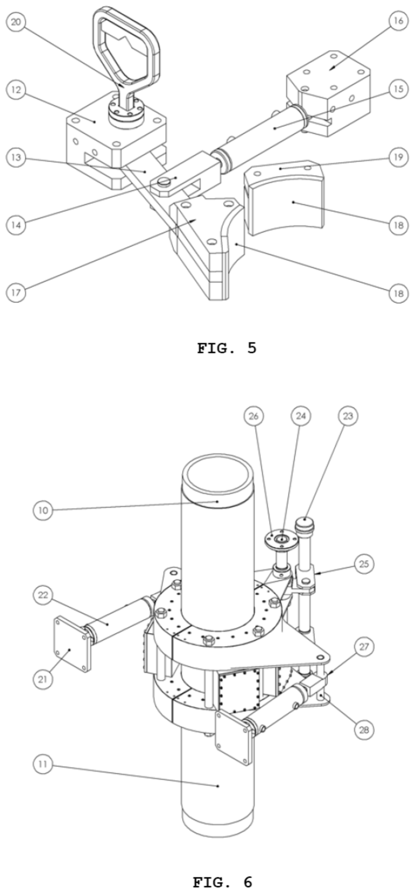

Figure 5 is a detailed representation of an arm of the attaching hydraulic assembly (3) of the claimed equipment, comprising attaching blocks (12), arms (13) of the attaching hydraulic assembly (3), attaching actuator fork (14), the hydraulic actuator (15) of the attaching hydraulic assembly (3), the attaching block (16) of the attaching hydraulic assembly actuator (3), the movable shoe for attachment to the pipe (17), the contact lining (18), the fixed shoe for attaching to the pipe (19) and handles for removing the axles of the attachment arms (20), according to a preferred embodiment of the present invention.
Figure 6 is a representation of parts of the coupling hydraulic assembly of the collar (4) of the claimed equipment, comprising piping (10), piping casing (11), attaching shoes of the coupling actuators (21), collar coupling actuators (22), a main axle of the coupling hydraulic assembly (23), a floating axle (24), connecting arms between axles (25), floating axle bearing (26), coupling actuator axle tip (27) and collar load application axles (28), according to a preferred embodiment of the present invention.

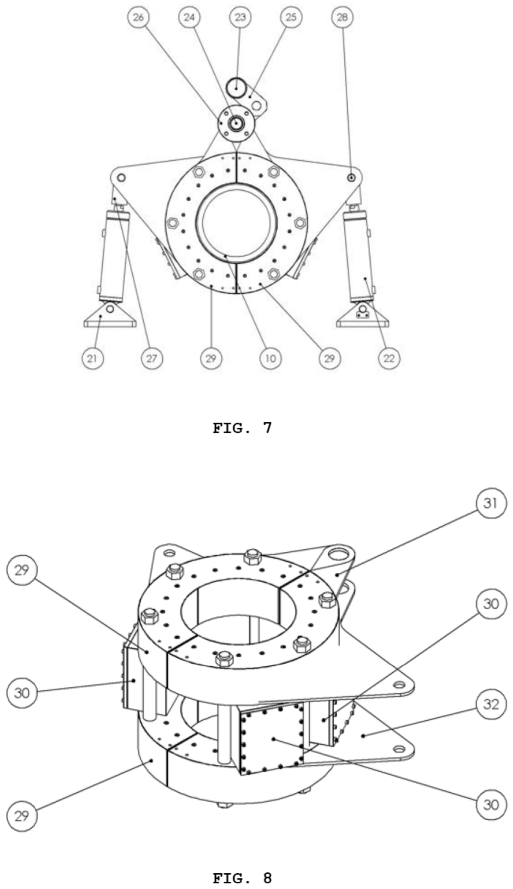

Figure 7 is a representation of parts of the coupling hydraulic assembly of the collar (4) of the claimed equipment, comprising piping (10), attaching shoes of the coupling actuators (21), coupling actuators of the collar (22), a main axle of the coupling hydraulic assembly (23), a floating axle (24), connecting arms between axles (25), bearing (26) of the floating axle (24), coupling actuator axle tip (27), collar load application axles (28) and halves of the collar of sensors (29), according to a preferred embodiment of the present invention.
Figure 8 is a representation of parts of the collar of sensors (5) of the claimed equipment, comprising halves of the collar of sensors (29), hermetic boxes (30), a connecting arm (31) and an opening and closing arm of the collar (32), according to a preferred embodiment of the present invention.

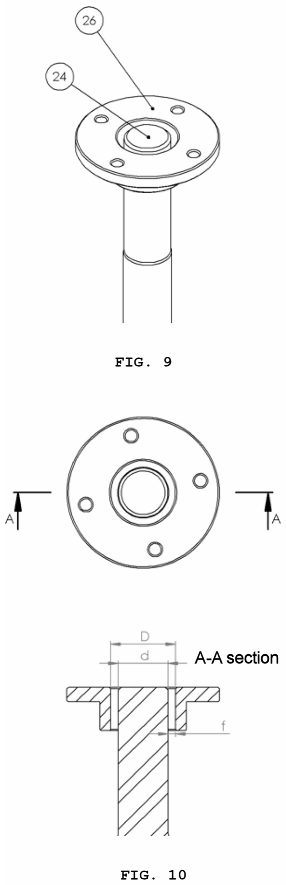

Figure 9 is a detailed representation of the floating axle bearing (26) of the claimed equipment, comprising the floating axle (24) and the bearing (26) of the floating axle (24), according to a preferred embodiment of the present invention.
Figure 10 is a cross-section view of the bearing (26) of the floating axle (24) of the claimed equipment, according to a preferred embodiment of the present invention.

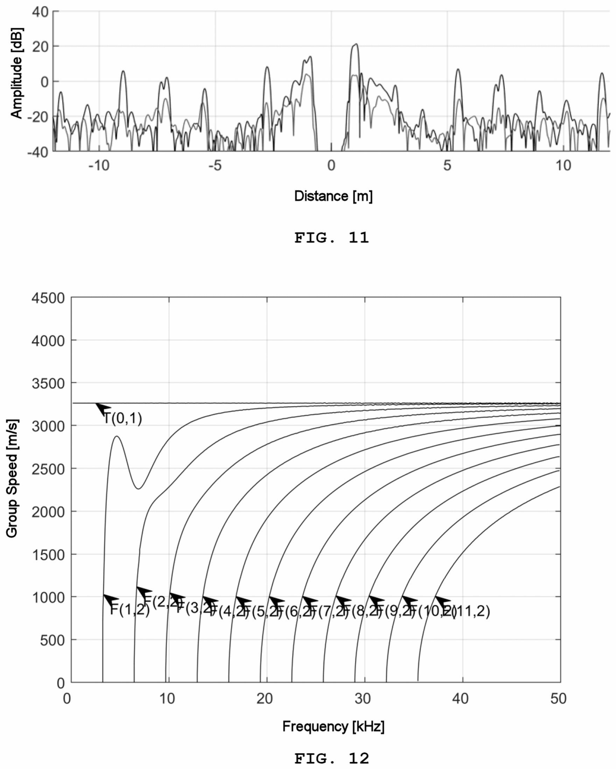

Figure 11 is a graph of a representative data collection of the result of a guided wave pipe inspection equipment with an EMAT type collar of sensors.
Figure 12 illustrates a typical example of a scatter plot for pipes showing the torsional T(0,1) and flexural modes of the same family of modes.

### Detailed Description of the Invention

The present invention is applied to the inspection of subsea piping, focusing on techniques for monitoring and detecting faults in subsea piping. Specifically, it addresses to the application of assemblies of sensors, such as piezoelectric and electromagnetic sensors, for detecting corrosion and structural defects in subsea piping, using propagating acoustic modes, guided waves, specifically the T(0,1) shear mode and the flexural modes of the same family of modes, using underwater vehicles (ROVs and AUVs) to facilitate access. In general, the present invention is applied in the field of subsea engineering, mechanics of materials, signal processing and non-destructive testing (NDT) technologies, applied in subsea environments, with considerations regarding accessibility challenges and structural integrity of the piping.

In general, the use of electromagnetic sensors gives the equipment of the present invention greater applicability in subsea piping due to its ability to operate on anti-corrosion and/or thermal casings. The most impactful operating and installation detail on the quality of the results obtained by sensors of this type is related to the distance between the sensor coils and the metallic material of the piping, also called lift-off.

In addition, for equipment where an array of two or more sensors is used simultaneously for the generation and/or capture of acoustic waves, the distribution of lift values along the array severely impacts the array's capacity. In the case of capture, an unbalanced array loses the ability to accurately distinguish between different guided wave modes present, which impacts the evaluation of the results.

In the case of the acoustic wave emission, an unbalanced array emits a greater number of unwanted modes, usually of high circumferential order, which ends up increasing the background noise of the measurements performed, degrading the signal-to-noise ratio of the guided wave signal and, consequently, reducing the ability to detect small defects.

The lift deviations along the array can occur locally, due to irregularities on the outer surface of the piping (e.g., from marine life remaining from the cleaning operations), or globally, due to a misalignment of centers between the array structure and the piping, as well as due to small differences in diameters between different piping to be inspected.

In order to minimize the aforementioned global deviation, the claimed equipment uses a floating axle, which, in addition to providing the rotating axle for the two halves of the array of sensors, also provides a positioning clearance for its center, allowing for concentricity adjustment. This floating axle is obtained by connecting a fixed axle, fastened to the equipment structure, which is connected to another parallel axle, with parallel movement, through two or more articulated arms.

This second axle, the floating one, is not rigidly attached to the structure, but instead, is mounted on a bearing, which provides clearance. This clearance allows the axle to move within this limit, while the articulated arms ensure the parallelism between the axles. The closing process of the collar of sensors on the piping itself moves the floating axle to its final position, ensuring the concentricity of the assembly of sensors and piping. Consequently, the degree of adjustment afforded by this technical feature confers a higher rate of successful couplings, increasing the efficiency of the installation operation.

In view of the disclosure, as illustrated in figures 1 to 10, the present invention relates to a piece of equipment for inspecting and monitoring subsea pipelines (1) for guided wave generation, wherein the piece of equipment (1) mainly consists of a structure (2), an attaching hydraulic assembly (3), a coupling hydraulic assembly (4), a collar of sensors (5) and a handle for ROV (6).

Specifically, the structure (2) of the piece of equipment (1) supports all installed components and their hydraulic subassemblies, providing mechanical protection to the internal components. The attaching hydraulic assembly (3) provides means for attaching all the equipment to the pipe (10), as illustrated in figures 3 and 4, through its components, attaching all the piece of equipment (1) around the outer circumference of the pipe, so that the axles (23) and (24) become parallel to the pipe (10). The coupling hydraulic assembly of the collar (4), as illustrated in more detail in figures 6 and 7, controls the coupling of the collar of sensors (5) around the pipe (10), acting to ensure that the halves (29) of the collar close appropriately. The halves (29) of the collar close using the floating axle (24) which in turn has the freedom of positioning defined by the mounting of the floating axle (24) in the bearings (26), which gives the collar of sensors (5) self-centering capability on the pipe (10).

The collar of sensors (5) is used for inspection in the pipe, and consists of a plurality of sensors which, when used in emission mode, produce shear force in the material of the pipe (10), preferably producing a shear acoustic wave belonging to the T(0,1) mode. Another assembly of sensors is also used in reception mode with the ability to measure shear stresses in the material predominantly in the tangential direction of the pipe (10), so as to be sensitive to the T(0,1) mode and flexural modes of its family, F(1,2), F(2,2), among others. The ROV handle (6) is a set of rods that provides a suitable location for the ROV to couple, making it possible for the ROV to guide the equipment to its working position in the pipe. The hydraulic connection point (7) is a receptacle, or hydraulic connector, which receives the hydraulic connection from the ROV and is used to conduct the pressurized fluid. It is through the hydraulic connection point (7) that the ROV pressurizes or depressurizes the actuators of the attaching and closing hydraulic assemblies of the collar.

The electrical connection point (8) is a receptacle, or connector, that receives the electrical connection from the ROV. Thus, through this electrical channel, electrical energy is supplied to power the electronic components contained in the hermetic boxes (30) and also the digital communication channel.

The mechanical stops (9) have the function of absorbing the first impact of the piece of equipment (1) against the piping (10) when approaching and fitting, acting as a guide for the piece of equipment (1) to slide into its position with the pipe centered. The piping (10) comprises the section of piping to be inspected.

The pipe casing (11) is the material that coats the pipe. The existence of this material depends on the design of this piping, so it may not exist. The attaching blocks (12) are the components that encapsulate the rotating axle for the arms of the attaching hydraulic assembly (13), as seen in figure 5, and are attached to the structure (2) of the piece of equipment (1). This component is also responsible for providing means to remove the axle, thus releasing the arm (13) from the attaching hydraulic assembly (3), which in turn releases the entire piece of equipment (1) from its coupling with the pipe (10). This function serves as a fusible device that can be activated if the piece of equipment (1) jams in the position coupled to the pipe (10), and this function is activated by means of the handle (20).

The arms (13) of the attaching hydraulic assembly (3) comprise the lever arms that are connected to the hydraulic actuators (15) via the forks (14) and, together with them, are responsible for applying force against the pipe (10) and thus fixing the equipment in the working position. Moreover, the fork of the attaching actuator (14) is the connecting element of the arm (13) with the actuator (15), providing the rotating axle for the arm.

The hydraulic actuator (15) of the attaching hydraulic assembly (3) is a hydraulic actuator that actuates the attachment arms (13) with the aim of attaching the piece of equipment (1) to the pipe (10) or releasing the same. In addition, the attaching block (16) of the actuator of the attaching hydraulic assembly (3) is the block that provides a rotating axle for the tip of the actuator (15) and is attached to the structure (2) of the piece of equipment (1).

The movable shoe for attachment to the pipe (17) is a part that can be made of hard plastic or metal and is attached to the end of the arm (13), in order to provide a larger contact area with the outer surface of the piping (10), normally with the casing (11), so that the contact occurs through the lining (18). The contact lining (18) is the lining of the part (17) made of soft material to make contact with the pipe (10) or with the outer casing (11) so as not to cause mechanical damage to the same. The fixed shoe for attaching to the pipe (19) is a component that can be made of hard plastic, responsible for providing a mechanical stop for the pipe, when the equipment approaches the working position. It is coated with a softer material for direct contact with the outer surface of the pipe or with the pipe casing (11) in order not to cause mechanical damage to the same.

The handles for removing the axles of the attachment arms (20) are handles used to remove the rotating axles of the attachment arms in case of tool jamming. The attaching shoes (21) of the coupling actuators can be made of metal and are fixed, by means of screws, to the front part of the structure (2), being connected to the coupling actuator of the collar (22) through an axle that provides freedom of rotation.

The coupling actuators (15) comprise a hydraulic actuator that actuates the attachment arms (13) in order to attach the piece of equipment (1) to the pipe (10) or release the same. The main axle (23) of the coupling hydraulic assembly (4) is a rotating axle, connected at the ends to the structure of the piece of equipment (2), to which the floating axle (24) is connected via the connecting arms between axles (25). The axle (23) gives the floating axle (24) repositionability, which in turn gives it the ability to accommodate small deviations in concentricity between the collar of sensors (5) and the pipe (10).

The floating axle (24) is a rotating axle that is free to move within the structure (2), being connected to the structure (2) through the bearings (26). It is connected to the main axle (23) through the connecting arms (25). The final function of this axle is to provide freedom so that possible misalignments between the pipe (10) and the tool (1), which may impact the coupling of the collar of sensors (5), are accommodated.

The connecting arms between the axles (25) are parts that can be metallic and that make the connection between the axles (24, 23), and they work together to bring the axles closer and further apart so that they remain parallel to each other, and, consequently, parallel to the pipe (10). The floating axle bearing (26) is a part fixed to the structure (2), which has the function of connecting the floating axle (24) to the structure, but providing a freedom of movement related to the difference between the diameter of the axle (24) and the inner diameter of the bearing.

Specifically, the use of the floating axle (24) in the claimed equipment, which, in addition to providing the rotating axle for the two halves of the array of sensors, also provides a positioning clearance for its center, allows for the concentricity adjustment. This floating axle (24) is obtained by connecting a fixed axle, fastened to the equipment structure, which is connected to another parallel axle through two or more articulated arms (25). This second axle, the floating one, is not rigidly attached to the structure, but instead is mounted on a bearing (26) with a clearance. This clearance allows the axle to move within this limit, while the articulated arms (25) ensure the parallelism between the axles. The very process of closing the collar of sensors (5) onto the piping (10) moves the floating axle (24) to its final position. Consequently, the degree of adjustment afforded by this feature confers a higher rate of successful couplings, increasing the efficiency of the installation operation.

The axle tip (27) of the coupling actuator (4) is a preferably fork-shaped part that connects the tip of the coupling actuator of the collar (22) to the axle (28). The collar load application axles (28) are axles mounted on the part (27) that are used to transfer force to the collar of sensors (5) via the arms (32).

The halves of the collar of sensors (29) are subdivisions of the collar of sensors (5). The division is intended to provide means for the quantity of sensors to be installed and removed from the pipe (10) with the simple action of pivoting. The hermetic boxes (30) are hermetically sealed metal boxes. Inside them are housed the electronic circuits responsible for the operation of the equipment.

The connecting arm (31) is an extension of the collar body, more precisely of the collar halves (29), which connects the body of the halves with the rotating axle (24). Its function is to pivot the two halves (29) to open and close around the pipe (10) and the casing (11). The opening and closing arm of the collar (32) is an extension of the collar body, more precisely of the collar halves (29), which connects the body of the halves with the rotating axle (28). Its function is to apply the force necessary for the collar halves (29) to pivot on the axle (24), in order to place the halves in their closed and open position around the pipe (10) and the casing (11).

In other words, the claimed inspection and monitoring piece of equipment (1) consists of a structure (2) that supports the attaching hydraulic assembly (3), the coupling hydraulic assembly of the collar (4), as seen in figures 6, 7, and 8, and sensors (5). This piece of equipment is guided and operated using ROV underwater vehicles that manipulate the same through the handle (6) designed for this function.

The piece of equipment (1) and its hydraulic assemblies are constructed of materials suitable for the underwater environment, which may be metallic, polymeric or a combination of both. The structure (2) is manipulated by ROV through a handle (6) attached directly to its rear face. On this face are also found the insertion points of the hydraulic (7) and electrical (8) connectors (hotstab). In the body of the structure (2) are installed mechanical stops (9), made of polymeric material, to minimize the friction with the piping (10) during installation and consequently minimize damage to the anti-corrosion casing (11).

The attaching hydraulic assembly (3) to the pipe (10) is attached to the structure (2) by means of four attaching blocks (12) which also support the arm axles (13). Each of these elements is coupled by means of a fork (14) to a hydraulic actuator (15) which in turn is coupled to an attaching block (16). At the other end of the arm (13) is mounted a shoe (17) which contains a lining (18) that makes contact with the pipe (10). In the opposite positions of the movable shoes (17) there are, attached directly to the structure (2), four fixed shoes (19).

The axles contained in the blocks can be removed via the safety handles (20) and function as mechanical fuses, allowing the arm (13) to move and consequently release the pipe (10).

The coupling hydraulic assembly of the collar (4) is fixed to the structure (2) by means of attaching shoes (21) that connect to two collar coupling actuators (22). In addition to the shoes (21), an axle (23) is also attached to the structure (2), which is connected to a floating axle (24) by connecting arms (25). The floating axle (24) has a radial clearance provided by the bearing (26).

The piston of the collar coupling actuators (22) is connected, via ferrules (27), to the collar load application axles (28) attached to the halves of the collar of sensors (29). The collar (5), in turn, has four hermetically sealed boxes (30) conditioning the control circuits of the piece of equipment (1), being constructed in two halves (29) that pivot on the floating axle (24) connected by a pivoting arm. The opening and closing movement of the collar is given by the force of the actuator (27) acting on the axes (28) that are connected to the collar by the load application arm (32).

## Claims

1. An inspection and monitoring piece of equipment (1) for subsea pipelines for guided wave generation, **characterized in that** it comprises:
a structure (2) supporting a hydraulic assembly for attaching (3) the assembly to the pipe, a hydraulic assembly for coupling the collar (4); a collar of sensors (5) and a handle for ROV (6).

2. The piece of equipment according to claim 1, **characterized in that** the structure (2) further comprises a hydraulic connection point (7), an electrical connection point (8) and mechanical stops (9).

3. The piece of equipment according to claim 1, **characterized in that** the attaching hydraulic assembly (3) comprises arms (13) comprising attaching blocks (12) at their ends.

4. The piece of equipment according to claim 3, **characterized in that** the arms (13) comprise lever arms that are connected to hydraulic actuators (15) via forks (14).

5. The piece of equipment according to claim 4, **characterized in that** the hydraulic actuators (15) comprise attaching blocks (16) at their ends.

6. The piece of equipment according to claim 4, **characterized in that** a movable shoe for attachment to the pipe (17) is attached to at the end of the arm (13), providing a larger contact area with the outer surface of the piping (10).

7. The piece of equipment according to claim 1, **characterized in that** the attaching hydraulic assembly (3) further comprises a fixed shoe (19) for attachment to the pipe (19) and handles for removing the axles of the attachment arms (20).

8. The piece of equipment according to claim 1, **characterized in that** the hydraulic assembly for coupling the collar (4) comprises collar coupling actuators (22) with attaching shoes (21) at their ends; a main axle (23); a floating axle (24); connecting arms between axles (25); the coupling actuator axle tip (27); collar load application axles (28); halves of the collar of sensors (29); hermetic boxes (30); a connecting arm (31); and a opening and closing arm of the collar (32).

9. The piece of equipment according to claim 8, **characterized in that** the floating axle (24) comprises a bearing (26).

10. The piece of equipment according to claim 1, **characterized in that** the collar of sensors (5) comprises an ultrasonic collar consisting of a plurality of electromagnetic acoustic sensors, which operate without direct contact with a base material of a pipe; and
wherein the collar of sensors (5) is coupled by an ROV at a distance to an intertidal zone.

11. The piece of equipment (1) according to claim 10, **characterized in that** the collar of sensors (5) consists of one or more parallel rows of sensors, forming one or more sensor rings.

12. The piece of equipment (1) according to claim 10, **characterized in that** the acoustic sensors are of the EMAT type and are arranged in four rows, separated into pairs, with a first emitter pair and a second receiver pair.

13. The piece of equipment (1) according to claim 10, **characterized in that** the acoustic sensors predominantly generate shear stresses in the longitudinal direction of the pipe, with the excitation of modes from the T01 family prevailing.

14. The piece of equipment (1) according to claim 13, **characterized in that** the acoustic sensors predominantly measure shear stresses in the longitudinal direction of the pipe, with the sensitivity of modes from the T01 family prevailing.

15. The piece of equipment (1) according to claim 12, **characterized in that** the second receiver pair of the acoustic sensors has an electronic circuit for preamplifying electrical signals and an electrical switch controlled by an embedded controller.

16. The piece of equipment (1) according to claim 12, **characterized in that** the first emitter pair of the acoustic sensors has an electrical switch controlled by an embedded controller.

17. The piece of equipment (1) according to claim 1, **characterized in that** the collar of sensors (5) comprises sensor arrangements that are accommodated in two parts being halves of a split ring,
wherein the halves of the split ring are joined by an axle that ensures the concentric closure of the two halves with each other.
